(19) Europäisches Patentamt
European Patent Office
Office européen des brevets

(11) Numéro de publication: **0 004 841**
**B1**

(12) **FASCICULE DE BREVET EUROPEEN**

(45) Date de publication du fascicule du brevet: **04.08.82**

(51) Int. Cl.³: **C 25 D 21/18** // C02F1/04, C02F1/66

(21) Numéro de dépôt: **79870006.8**

(22) Date de dépôt: **04.04.79**

(54) **Procédé intégré de traitement des eaux résiduaires d'ateliers d'anodisation.**

(30) Priorité: **05.04.78 FR 7810047**

(43) Date de publication de la demande: **17.10.79 Bulletin 79/21**

(45) Mention de la délivrance du brevet: **04.08.82 Bulletin 82/31**

(84) Etats contractants désignés: **BE CH DE GB IT NL SE**

(56) Documents cités:
**FR A 2 167 243**
**US A 3 890 226**
**US A 3 909 405**
**US A 3 973 987**
**CHEMICAL ABSTRACTS, volume 79, 30 juillet 1973, No. 4, abrégé 23291r, page 314 COLUMBUS, OHIO (US) T. NAKAYAMA et al.: »Newly developed process for disposal of effluent from duodizing plants«.**
**CHEMICAL ABSTRACTS, volume 84, 31 mai 1976, No. 22 abrégé 157 246s, page 476 COLUMBUS, OHIO (USA) & JP-A-75 120 442, 20.09.1975**

(73) Titulaire: **EXERGIE Société de Personnes à Responsabilité Limitée, Avenue Victor Emmanuel III, 67, B-1180 Bruxelles (BE)**

(72) Inventeur: **Wajc, Samuel J., Prof., avenue de la Grande Boucle 13, B-1420 Braine l'Alleud (BE)**

(74) Mandataire: **Van Malderen, Michel et al, p.a. Freylinger & Associés 22 avenue J.S. Bach (bte 43), B-1080 Bruxelles (BE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 004 841 B1

BUNDESDRUCKEREI BERLIN

Procédé intégré de traitement des eaux résiduaires d'ateliers d'anodisation

La présente invention concerne un procédé intégré de traitement des eaux résiduaires d'ateliers d'anodisation de pièces en aluminium ou en alliage d'aluminium pour laquelle on utilise une solution aqueuse d'acide sulfurique dans le bain d'anodisation et une lessive de soude caustique dans le bain de décapage.

On sait que l'anodisation, appelée également oxydation anodique, est un procédé électrochimique de traitement de surface de l'aluminium et de ses alliages par formation de couches protectrices d'épaisseur et de texture variables constituées d'oxydes du métal de base. Les principales étapes opératoires consistent à dégraisser les pièces à traiter, à les décaper, à les anodiser et à colmater à l'eau chaude ou à la vapeur d'eau la couche d'oxyde obtenue par anodisation. Entre les bains successifs énumérés ci-dessus, les pièces subissent un rinçage énergique à l'eau.

La compensation des bains successifs peut varier d'une chaîne de production à l'autre, mais pour de nombreuses applications, et en particulier pour l'anodisation de bandes et de profilés mats, le décapage se fait généralement dans un bain aqueux de soude caustique, tandis que le bain d'anodisation est essentiellement une solution aqueuse d'acide sulfurique.

Le procédé de la présente invention concerne précisément le traitement des eaux résiduaires contenant respectivement de la soude caustique et de l'acide sulfurique en proportions variables.

Il est bien connu (cf. S. Wernick et R. Pinner — The surface treatment and finishing of aluminium and its alloys — R. Draper, Teddington, chapitre 21) que les eaux de rinçage, abondantes mais diluées, doivent être traitées séparément des solutions concentrées de décapage et d'anodisation par mélange entre elles, ajustement du pH (par exemple par addition de soude caustique ou d'acide chlorhydrique), décantation et évacuation à l'égout, ou éventuellement recyclage partiel. L'hydroxyde d'aluminium précipité n'est pas toxique; on peut donc le séparer par filtration ou par un moyen analogue et l'évaceur vers un terrain de décharge.

Les eaux résiduaires concentrées provenant directement du décapage et de l'anodisation doivent donc être traitées indépendamment des eaux de rinçage (cf. S. Wernick et R. Pinner — référence citée plus haut) et la présente invention se rapporte plus spécialement au traitement des eaux concentrées et aux installations nécessaires à cet effet.

On peut résumer le problème en posant, par exemple que le débit des eaux usées de décapage contient 50 g/l de soude caustique et 100 g/l d'aluminate de sodium (ainsi que des traces de gluconate de sodium utilisé comme stabilisant de l'aluminate), tandis que le débit des eaux usées d'anodisation contient par exemple 200 g/l d'acide sulfurique et 70 g/l de sulfate d'aluminium. Le débit soutiré de la cuve de décapage doit être, bien entendu, aussi petit que possible, mais toutefois suffisant pour éviter que la concentration en aluminate de sodium dans cette cuve ne dépasse le seuil au-dessus duquel il y a précipitation incontrôlée d'hydroxyde d'aluminium. De même, le débit soutiré de la cuve d'anodisation doit être suffisant pour que la concentration en sulfate d'aluminium ne dépasse pas le seuil au-delà duquel la couche d'oxyde obtenue par anodisation présenterait des défauts

On a déjà proposé plusieurs procédés, soit pour traiter les eaux usées de décapage seules, soit pour traiter les eaux de décapage et d'anodisation en un procédé intégré.

Ainsi, suivant le brevet japonais 75-151.929 de Hashimoto Hirozaku et Marushima Norio, on mélange les deux débits à de la chaux de manière à obtenir, après précipitation, filtration et réaction à 1200° C, un additif de motier ou de ciment.

Le procédé intégré le plus simple consiste toutefois à mélanger la totalité des débits concentrés à traiter, à ajuster le pH à 7 par addition d'acide sulfurique et d'hydroxyde de sodium (US 3 890 226), à filtrer la suspension, à déposer le gâteau d'hydroxyde d'aluminium impur sur un terrain de décharge et à évacuer le filtrat à l'égout.

Selon le brevet japonais 76-34.563 de Hayashi Toshio, on serait en mesure — en procédant par étapes — de recycler la soude caustique. Par mélange des deux débits, on précipite de l'hydroxyde d'aluminium et on forme une solution de sulfate de sodium. On sépare par filtration un gâteau d'hydroxyde d'aluminium, qui sera éliminé, et un filtrat auquel on ajoute de la chaux. On précipite ainsi du gypse (éliminé après filtration) et une solution contenant la plus grande partie de la soude caustique introduite initialement dans le bain.

Conformément au brevet japonais 74-130.907 de Tashiro Hiroshi, on prépare par des réactions et des filtrations alternées des deux débits une solution d'aluminate de sodium. Cette dernière est mise à réagir avec un sel de cobalt ou de magnésium de manière est mise à réagir avec un sel de cobalt ou de magnésium de manière à précipiter l'aluminate correspondant. Après filtration, séchage et réaction au-delà de 1000° C, on produit un spinelle utilisable dans la fabrication des réfractaires.

Suivant le brevet japonais 74-107.023 de Tashiro Hiroshi, Yamashita Masato et Harada Noboue, on se limite au traitement de la solution usée de décapage. Par addition d'un lait de chaux, on précipite un aluminate de calcium dont on tire un ciment alumineux par filtration, séchage, chauffage à 1200° C et broyage. Il est clair que le filtrat contient la soude caustique qui, en principe, est recyclable.

Enfin, selon le brevet japonais n° 533.111 du Professeur Tajima, on fait appel au traitement séparé des deux débits. Aux eaux de décapage on ajoute du silicate de sodium de manière à précipiter un

silicate double d'aluminium et de sodium et a régénerer, en principe complètement, le bain de soude caustique initial. D'autre part, le sulfate d'aluminium du bain d'anodisation est précipité sous forme d'alun alumino-ammonique ou alumino-potassique par addition de sulfate d'ammonium ou de potassium. L'acide sulfurique non transformé est recyclable. D'autres possibilités de recyclage de l'acide sulfurique sont offertes par des procédés purement physico-chimiques tels que la séparation de sulfate d'aluminium par évaporation, cristallisation et filtration (FR 2 167 243, JP Kokai 75 120 442) ou par échange ionique (Industrial and Engineering Chemistry PDD, 2, 263, 1963).

Ces divers procédés présentent certains inconvénients, notamment le fait de nécessiter l'achat d'un ou plusieurs produits supplémentaires pour effectuer les réactions, le fait que la possibilité de vente des produits formés n'est pas certaine et le fait qu'en exploitation industrielle les débits recyclés risquent d'être souillés par les produits nouveaux et que la précipitation pourrait éventuellement se poursuivre dans les cuves. En outre, quelques-uns des procédés antérieurs font appel à des fours opérant à des températures très élevées, ce qui renchérit l'installation ainsi que sa mise en oeuvre.

Il a été trouvé à présent un procédé intégré de traitement des eaux résiduaires concentrées d'anodisation permettant d'éviter les inconvénients précités et de traiter de manière simple et économique les eaux residuaires provenant des ateliers d anodisation du type décrit en assurant une économie par régénération et recyclage d'une partie des réactifs et par récupération de sous-produits commercialisables, tout en évitant la pollution résultant du rejet d'eaux non totalement épurées en constituants nocifs.

Dès lors, la presente invention procure un procédé intégré de traitement des eaux résiduaires d'ateliers d'anodisation de pièces en aluminium ou en alliage d'aluminium pour laquelle on utilise une solution aqueuse de soude caustique dans le bain de décapage et une solution aqueuse d'acide sulfurique dans le bain d'anodisation, procédé dans lequel le traitement des eaux de rinçage, diluées, s'effectue de manière connue, par mélange entre elles et ajustement du pH, indépendamment du traitement des eaux résiduaires concentrées provenant respectivement du décapage et de l'anodisation, ledit procédé étant caractérisé par le fait que le traitement des eaux residuaires concentrées comprend les ensembles opératoires suivants:

1°) la production de sulfate d'aluminium à l'état d'une solution concentrée ou de cristaux hydratés par traitement d'une partie du débit d'eau residuaire d'anodisation par évaporation et cristallisation ou au moyen d'une partie de l'hydroxyde d'aluminium formé dans l'ensemble opératoire 2°).

2°) la production d'hydroxyde d'aluminium précipité et d'une solution de sulfate de sodium par traitement de la partie du débit d'eau residuaire d'anodisation non utilisée dans l'ensemble opératoire 1°) au moyen d'une partie du debit d'eau residuaire de décapage et

3°) la production d'une solution d'aluminate de sodium par reaction de la partie du débit d'eau residuaire de decapage non utilisée dans l'ensemble opératoire 2°) avec une partie de l'hydroxyde d'aluminium produit dans l'ensemble operatoire 2°) et élimination d'une quantité d'eau de façon à obtenir finalement l'aluminate de sodium à l'état de solution concentrée de poudre ou de granules.

Il est avantageux de recycler au réacteur utilisé pour la production d'hydroxyde d'aluminium précipité et d'une solution de sulfate de sodium, après démarrage de la production, une partie de la solution de sulfate d'aluminium produite dans l'ensemble opératoire 1°) et/ou une partie de la solution d'aluminate de sodium produite dans l'ensemble operatoire 3°).

On voit donc dans ce qui précède que, selon une première variante opératoire connue en soi, le traitement d'une partie du débit d'eau résiduaire d'anodisation dans l'ensemble opératoire 1°) s'effectue par simple évaporation et cristallisation de manière à obtenir une solution concentrée d'acide sulfurique que l'on recycle à la cuve d'anodisation et des cristaux de sulfate d'aluminium hydrate que l'on sépare.

Selon une seconde variante opératoire connue en soi, le traitement d'une partie du débit d'eau residuaire d'anodisation dans l'ensemble opératoire 1°) s'effectue par réaction avec une partie de l'hydroxyde d'aluminium formé dans l'ensemble operatoire 2°), de manière à former une solution de sulfate d'aluminium que l'on évapore jusqu'à l'obtention d'une solution concentrée ou de cristaux hydratés que l'on peut commercialiser.

Dans le cas où le débit d'eau résiduaire d'anodisation est déficitaire, on compose le défaut d'eau résiduaire acide dans le deuxième ensemble opératoire par l'addition d'une quantité correspondante d'acide sulfurique.

La répartition des débits d'eaux résiduaires de décapage et d'anodisation entre les trois ensembles opératoires variera d'après les conditions de fonctionnement de l'atelier d'anodisation.

Il va de soi que les eaux de rinçage, qui contiennent également des éléments récupérables, peuvent être utilisées dans certains stades du procédé. Ainsi, par exemple, l'hydroxyde d'aluminium produit dans le deuxième ensemble opératoire peut avantageusement être lavé à l'aide de la boue liquide déposée dans le bassin de décantation de la station de traitement des eaux de rinçage avant d'être stocké en vue de son utilisation dans le troisième ensemble opératoire.

D'autre part, il s'est avéré intéressant de recycler l'eau mère résiduelle de la cristallisation de sulfate

de sodium dans le deuxième ensemble opératoire vers le réacteur de précipitation d'hydroxyde d'aluminium compris dans le même ensemble.

On a vu que le premier ensemble opératoire vise à la production de sulfate d'aluminium. Dans cet ensemble opératoire, une partie du débit d'eau usée d'anodisation (qui contient par exemple 200 g/l de $H_2SO_4$ et 70 g/l d'$Al_2(SO_4)_3$) est traitée par évaporation et cristallisation — soit dans un évaporateur-cristallisoir, soit dans deux appareils distincts. La partie du débit ainsi traitée correspond au solde de la quantité nécessaire pour réagir dans le deuxième ensemble avec de l'eau résiduaire de décapage. Le magma cristallin obtenu est traité par filtration, décantation, décantation centrifuge ou tout autre procédé adéquat de séparation liquide-solide. On obtient d'une part du sulfate d'aluminium hydraté, qui trouve des débouchés importants en papeterie et pour le traitement d'eaux usées par exemple, et d'autre part une solution concentrée d'acide sulfurique qui n'a pas été souillée par de nouveaux réactifs et qui est donc recyclable à l'étape d'anodisation.

En variante, une partie du gâteau d'hydroxyde d'aluminium produit dans le deuxième ensemble opératoire est dissoute par une partie du débit d'eaux résiduaires d'anodisation. La solution de sulfate d'aluminium obtenue est évaporée, soit modérément de manière à obtenir une solution concentrée, soit plus à fond de manière à obtenir par simple refroidissement du sulfate hydraté sous forme solide.

Le deuxième ensemble opératoire vise à produire du sulfate de sodium et de l'hydroxyde d'aluminium. Dans cet ensemble, le débit d'eau usée d'anodisation non utilisé dans le premier ensemble est mélangé, dans un réacteur, à une partie du débit d'eau usée de décapage de manière à permettre le déroulement des réactions suivantes:

$$H_2SO_4 + 2\,NaOH \longrightarrow Na_2SO_4 + 2\,H_2O$$

$$NaAlO_2 + 2\,H_2O \longrightarrow \underline{Al(OH)_3}\downarrow + NaOH$$

$$Al_2(SO_4)_3 + 6\,NaOH \longrightarrow 2\,\underline{Al(OH)_3}\downarrow + 3\,Na_2SO_4$$

A la neutralité, tout se passe donc comme si seule la première réaction avait eu lieu entre la soude caustique et l'acide sulfurique utilisés dans l'atelier d'anodisation, tandis que l'aluminium temporairement mis en solution lors du décapage et de l'anodisation est séparé par précipitation d'hydroxyde d'aluminium lors du mélange des deux débits. Cette façon de procéder est nécessairement adoptée lors du démarrage de l'installation. Dès que l'on a commencé à produire les solutions de sulfate d'aluminium et d'aluminate de sodium, on peut en recycler avantageusement une partie vers ce réacteur: on y produira toujours l'hydroxyde d'aluminium et le sulfate de sodium mais le contrôle du pH en sera plus facile. La boue produite est traitée par filtration ou par un autre procédé adéquat de séparation liquide-solide. Le résidu solide peut, comme on l'a vu, être lavé à l'aide de la boue liquide formée dans le bassin de décantation de la station de traitement des eaux de rinçage et est ensuite stocké en vue de son utilisation dans le troisième et éventuellement le premier des ensembles opératoires. La solution de sulfate de sodium restante est partiellement évaporée et crisstallisée dans un évaporateur-cristallisoir ou dans deux appareils distincts. Le magma cristallin obtenu est traité par filtration, décantation, décantation centrifuge ou tout autre procédé adéquat de séparation liquide-solide. Les cristaux de sulfate de sodium décahydraté (sel de Glauber) obtenus sont soit conditionnés pour éviter le prise en masse et emballés pour la vente, soit traités par séchage plus poussé de manière à former des cristaux déshydratés qui sont alors emballés pour la vente. Ces produits trouvent des débouches en papeterie (pâte Kraft), en verrerie, en cimentrie, etc. Les eaux mères résiduelles après cristallisation constituent un débit de purge qui peut être avantageusement dirigé vers le réacteur de précipitation d'hydroxyde d'aluminium. Le sulfate de sodium encore présent finira donc par être cristallisé, tandis que les ions étrangers seront adsorbés par l'hydroxyde d'aluminium et finiront par passer dans le troisième et éventuellement le premier des ensembles opératoires et, donc, resprectivement dans l'aluminate de sodium et le sulfate d'aluminium qui y sont produits.

Le troisième ensemble opératoire vise à produire de l'aluminate de sodium au départ d'une partie au moins des eaux résiduaires de décapage et de l'hydroxyde d'aluminium obtenu dans le deuxième ensemble. On sait que la composition du bain de décapage est métastable (cf. Kirk and Othmer Encyclopedia of Chemical Technology, 1962, II, p. 7 et Gmelins Handbuch der anorganischen Chemie, Verlag Chemie, Berlin, 1934, XXXV, B, p. 360) et que, si des traces de gluconate de sodium n'y étaient pas ajoutées pour chélater l'aluminium, l'aluminate de sodium en solution se décomposerait suivant l'équation de Bayer:

$$AlO_2Na + 2\,H_2O \longrightarrow \underline{Al(OH)_3}\downarrow + NaOH$$

Mais il est évident que cette réaction, d'ailleurs très lente, ne peut se produire si on élimine l'eau du système. Autrement dit, on peut ajouter de l'hydroxyde d'aluminium à l'eau usée de décapage pour faire réagir la soude caustique encore présente, à condition d'en éliminer l'eau; on mettra alors en oeuvre la réaction inverse de la précédente.

$$Al(OH)_3 + NaOH \longrightarrow AlO_2Na + 2\ H_2O \nearrow$$

La réaction se déroulera par exemple dans un réacteur mélangeur continu servant simultanément d'évaporateur. Ce réacteur est alimenté, d'une part de la partie du débit d'eau résiduaire de décapage qui n'a pas été utilisée dans le deuxième ensemble opératoire et d'autre part de la quantité d'hydroxyde d'aluminium produit dans ce même deuxième ensemble opératoire. Les conditions de fonctionnement du réacteur (température, pression, temps de séjour) peuvent être choisies dans une gamme très large. Ainsi, si l'hydroxyde d'aluminium précipité dans le deuxième ensemble opératoire est un gel, on pourra opérer succesivement la mise en solution à température modérée, une purification par centrifugation et l'évaporation dans des appareils distincts. La solution d'aluminate de sodium produite est un liquide très visqueux à température ambiante, mais qui est facilement soutiré à chaud du réacteur ou de l'évaporateur. Ce produit peut être mis tel quel en fûts pour la vente ou bien être éventuellement deshydraté dans un appareil de séchage adéquat et conditionné (par exemple par broyage et tamisage ou par séchage par pulvérisation) pour la vente sous forme de granules ou de poudre. L'aluminate de sodium trouve notamment un débouche intéressant dans les papeteries et les stations de traitement d'eau.

Il va sans dire que les techniques usuelles d'économie d'énergie sont avantageusement appliquées au cours de l'exécution du procédé. On peut, par exemple, utiliser la vapeur produite dans le troisième ensemble opératoire pour alimenter les évaporateurs des deux autres ensembles, fonctionnant alors sous pression réduite. De même, les condensats seront avantageusement utilisés pour chauffer le bâtiment abritant l'installation décrite ici.

L'invention sera décrite plus en détail en référence aux dessins annexés et à l'aide d'exemples de mise en oeuvre donnés à titre d'illustration.

Dans les figures:

La figure 1 est un schéma de principe du procédé complet de l'invention, comprenant donc les trois ensembles opératoires, indiquant également des appareils qui peuvent — à titre d'exemple — être utilisés pour la réalisation de ce procédé.

La figure 2 est un diagramme triangulaire du système $H_2SO_4-Al_2(SO_4)_3-H_2O$ donnant la composition de l'eau résiduaire d'anodisation utilisée dans l'exemple 1 et montrant la composition des produits formés au cours du traitement de cette eau dans le premier ensemble opératoire du procédé de l'invention (voir exemple 1 ci-après). La figure 3 est un schéma général des quatre variantes opératoires possibles selon l'invention

Dans la figure 1 on distingue trois ensembles opératoires séparés par des traits interrompus et désignés respectivement par I, II et III. Le premier ensemble opératoire — désigné par I — comprend l'amenée d'une partie de l'eau résiduaire d'anodisation, via la pompe $P_2$ (ou la pompe de réserve $P_4$), dans un évaporateur EA éventuellement sous vide partiel et chauffé par chauffage indirect par la vapeur produite dans le troisième ensemble opératoire III (vapeur passant ensuite au condenseur $C_3$).

La solution concentrée obtenu dans l'évaporateur EA est refroidie dans le cristallisoir CrA et les cristaux de sulfate d'aluminium $[Al_2(SO_4)_3]$ ainsi formés sont separés dans un décanteur centrifuge et éventuellement conditionnés pour la vente, tandis que le liquide résiduel qui consiste en acide sulfurique est recyclé par la pompe $P_5$ vers le réservoir à acide précédant la station d'anodisation ou vers la cuve d'anodisation.

La vapeur formée dans l'évaporateur EA passe dans une enceinte où elle est condensée sous vide à contact direct avec de l'eau de refroidissement venant de BAé.

Le cristallisoir est également refroidi par de l'eau venant d'un bassin d'aération BAé.

Le deuxième ensemble opératoire — désigne par II — comprend la réaction du solde de l'eau résiduaire d'anodisation, non utilisée dans le premier ensemble I, avec une partie de l'eau résiduaire de décapage. Ces eaux, passant par les pompes $P_2$ (ou $P_4$) et $P_1$ (ou la pompe de réserve $P_3$) sont amenées dans un réacteur $R_1$ (qui peut être par exemple un mélangeur statique) où elles réagissent entre elles en formant une suspension de $Al(OH)_3$ qui est tamponnée et filtrée. Le solide ainsi séparé $[Al(OH)_3]$ est stocké dans un réservoir à trémie, tandis que le filtrat passe dans un évaporateur EB à pression réduite, chauffé par un serpentin dans lequel circule de la vapeur produite dans le troisième ensemble opératoire, puis dans un cristallisoir CrB d'où on récolte du sulfate de sodium cristallisé qui peut être mis en fûts pour la vente. La vapeur formée dans l'évaporateur EB est traitée avec celle de l'évaporateur EA. Les eaux mères résiduelles de la cristallisation peuvent être dirigées vers le réacteur $R_1$ de précipitation d'hydroxyde d'aluminium (recyclage non représenté au schéma).

Le troisième ensemble opératoire — désigné par III — comprend la réaction du solde de l'eau résiduaire de décapage, non utilisée dans le deuxième ensemble, avec l'hydroxyde d'aluminium produit dans le deuxième ensemble et amené du réservoir à trémie, par exemple par une vis d'Archimède, dans un réacteur $R_2$ sous pression et porté à température élevée par un serpentin S afin

de produire de la vapeur (utilisée pour les évaporateurs EA et EB) et une solution concentrée d'aluminate de sodium ($AlO_2Na$), qui peut être transformée en poudre ou en granules.

Après utilisation, les eaux de refoidissement et les condensats $C_1$, $C_2$ et $C_3$ retournent vers un réservoir intermédiaire (Ep) et un refroidissement à l'air permet de recycler l'eau de refroidissement de Ep à BAé.

Dans le schéma de la figure 1, le symbole F concerne des débitmètres qui permettent de mesurer et donc de régler les circulations de matières du procédé.

Les produits formés dans l'installation intégrée complète de la figure 1 sont donc de l'acide sulfurique (recyclé à l'anodisation), du sulfate d'aluminium, du sulfate de sodium et de l'aluminate de sodium.

La figure 3 est un schéma général des quatre variantes possibles dans le cas où l'ensemble I décrit ci-dessus est remplacé par une installation de production d'$Al_2(SO_4)_3$ par réaction. Dans ce cas, il n'y a pas de recyclage d'acide sulfurique. Lors du demarrage de l'installation, le réacteur $Al(OH)_3$ est alimenté par les débits A et C. La figure 3 est essentiellement une version simplifiée de la figure 1, sauf pour ce qui est de l'ensemble I: on a considéré à la figure 3 que le sulfate d'aluminium est produit par réaction et non par évaporation et cristallisation. Lorsque l'installation fonctionne en régime, le réacteur $Al(OH)_3$ (ensemble II) est alimenté de préférence par les débits B et D (figure 3), compte tenu de considérations secondaires, relatives au type d'hydroxyde que l'on souhaite précipiter, à la facilité du contrôle de pH, au souci d'économie d'énergie pour l'ensemble de l'installation, etc.

Les mêmes variantes sont applicables au cas de la figure 1. Les appareils indiqués dans cette figure 1 ne constituent que des exemples de réalisation et on peut bien entendu les remplacer par des équivalents techniques connus en soi sans sortir du cadre de la présente invention.

Les exemples qui suivent, donnés ci-après à titre illustratif mais nullement limitatif, indiquent les conditions opératoires de mise en oeuvre du procédé.

## Exemple 1

Cet exemple concerne le premier ensemble opératoire du procédé suivant l'invention.

Un échantillon de 16 l d'eau usée d'anodisation (densité 1,19, point F sur le diagramme triangulaire de la figure 2 annexée dans laquelle les pourcentages indiqués sont exprimés en pourcentages pondéraux) a été d'abord soumis à une évaporation partielle réalisée à la pression atmosphérique et on a ainsi séparé de la vapeur d'eau pure en D et une solution concentrée chaude en G. Par refroidissement à 20° C, on a provoqué la séparation des phases R (solution à 43% en poids d'acide sulfurique) et S (gâteau de filtration de sulfate d'aluminium). On remarque que S est encore souillé d'acide sulfurique interstitiel qui, en exploitation industrielle, peut être partiellement récupéré par lavage du gâteau à l'aide d'une solution saturée de sulfate d'aluminium. Même sans cela, on remarque que 83% de l'acide sulfurique libre dans F est récupéré dans R, tandis que 86,8% du sulfate d'aluminium présent a été extrait de F.

## Exemple 2

Cet exemple concerne le deuxième ensemble opératoire du procédé suivant l'invention.

Un échantillon de 5 l d'eau usée de décapage (densité 1,10) a été mélangé avec 2,32 l d'eau usée d'anodisation (densité 1,19). La boue résultante était à pH=7. Après filtration sous vide et lavage à l'eau, on a obtenu 7 l de solution de sulfate de sodium (densité 1,10; 120 g/l) qui a été évaporée à pression atmosphérique jusqu'au tiers de son volume initial. La solution concentrée et chaude a été refroidie. La séparation du sel de Glauber a commencé vers 28° C et, vers 15° C, le poids de sel de Glauber séparé était de 1,52 kg (dont 0,67 kg de sulfate de sodium).

D'autre part, le gâteau obtenu (après rinçage à l'eau) pesait environ 850 g, dont 550 g d'hydroxyde d'aluminium et 300 g d'eau.

## Exemple 3

Cet exemple concerne le troisième ensemble opératoire du procédé suivant l'invention.

A la pression atmosphérique et à l'ébullition, un échantillon de 2 l d'eau usée de décapage dissout 390 g de boue d'hydroxyde d'aluminium à 50% en poids (l'addition d'hydroxyde d'aluminium étant progressive). On a obtenu ainsi une solution concentrée d'aluminate de sodium contenant 450 g d'aluminate. L'addition de petites quantités de cette solution (250 ppm par exemple) à une eau usée provoque la formation d'un précipité volumineux d'hydroxyde d'aluminium (décomposition de l'aluminate en présence d'un excès d'eau) à la surface duquel les impuretés de l'eau s'adsorbent.

Exemple 4

Cet exemple concerne une illustration de cas général d'intégration des trois ensembles opératoires décrits respectivement aux exemples 1, 2 et 3, exemple dans lequel le débit d'eau d'anodisation est supérieur au débit nécessaire à la production d'hydroxyde d'aluminium dans le deuxième ensemble. Le schéma de fabrication de la figure 1 représente cet exemple d'intégration.

Le débit d'eau usée de décapage est de 2 $m^3/h$ et ses caractéristiques principales sont: densité 1,10, concentration en NaOH 50 g/l, concentration en $AlO_2Na$ 100 g/l. Ceci correspond à une concentration initiale de NaOH de 98,8 g/l lors du décapage.

Le débit d'eau usée d'anodisation est de 0,6 $m^3/h$ et ses caractéristiques principales sont: densité 1,19, concentration en $H_2SO_4$ 200 g/l, concentration en $Al_2(SO_4)_3$ 70 g/l. Ceci correspond à une concentration initiale d'$H_2SO_4$ de 260,2 g/l dans le bain d'anodisation.

On calcule facilement que les débits d'eau d'anodisation dirigés respectivement vers le premier ensemble et vers le deuxième ensemble sont de 0,16 $m^3/h$ et 0,44 $m^3/h$, tandis que les débits d'eau de décapage dirigés respectivement vers le deuxième ensemble et vers le troisième ensemble sont de 0,94 $m^3/h$ et 1,06 $m^3/h$. Le premier ensemble produira alors environ 90 kg de vapeur d'eau par heure, 32 kg d'$H_2SO_4$/h (en solution à 43% en poids) et 11,2 kg d'$Al_2(SO_4)_3$/h (par exemple sous forme de $Al_2(SO_4)_3 \cdot 18\ H_2O$ ou d'un sel contenant plus ou moins d'eau de cristallisation). Le deuxième ensemble produira environ 465 kg de vapeur d'eau par heure, 103,3 kg d'$Al(OH)_3$/h (sous forme de gâteau humide) et 164,9 kg de $Na_2SO_4$/h (par exemple sous forme de $Na_2SO_4 \cdot 10\ H_2O$ ou d'un sel moins hydraté). Le troisième ensemble produira environ 1000 kg de vapeur d'eau par heure et 214,7 kg d'$AlO_2Na$/h (sous forme de solution concentrée ou sous forme de granules ou de poudre).

Exemple 5

Cet exemple illustre la marche à suivre quand le débit d'eau d'anodisation est faible.

On suppose que la composition des débits à traiter est la même qu'à l'exemple 4. S'il se fait que le débit d'eau usée de décapage reste celui du cas précédent (ex. 4), mais que le débit d'eau d'anodisation soit compris entre 0,44 et 0,076 $m^3/h$, il faudra compenser le déficit en acide du deuxième ensemble en y ajoutant de l'acide sulfurique.

Ainsi, pour un débit d'eau usée d'anodisation de 0,3 $m^3/h$, ce débit serait dirigé à raison de 0,012 $m^3/h$ vers le premier ensemble et de 0,288 $m^3/h$ vers le deuxième ensemble. Le deuxième ensemble recevrait en outre 41,2 kg/h d'acide sulfurique et 0,96 $m^3/h$ d'eau de décapage. Le troisième ensemble traiterait 1,04 $m^3/h$ d'eau de décapage et 101,4 kg/h d'hydroxyde d'aluminium. On remarque que, dans ce cas encore, on produit à la fois du sulfate d'aluminium (très peu), du sulfate de sodium et de l'aluminate de sodium.

Exemple 6

Cet exemple concerne le premier ensemble opératoire du procédé suivant l'invention.

Un échantillon de 1 l d'eau usée d'anodisation contenant 200 g de $H_2SO_4$ et 70 g de $Al_2(SO_4)_3$ dissout complètement, à 60° C, un gâteau de 424 g contenant 318 g d'eau et 106 g de $Al(OH)_3$ sous forme de gel frais.

Les données numériques citées dans les exemples 1 à 6 doivent être considérées comme illustratives du fonctionnement idéal du procédé. Il est évident que tous les appareils constituant les ensembles (réacteurs, cristallisoirs, évaporateurs, filtres, etc.), qu'ils fonctionnent en discontinu, en semi-continu ou en continu, doivent être calculés de manière que les réactions et opérations unitaires indiquées se déroulent avec un rendement élevé. D'autre part, pour chaque opération, il conviendra de vérifier que la présence dans le bain d'additifs organiques ou minéraux non mentionnés ci-dessus ne modifie pas fondamentalement le déroulement des opérations au point de rendre inadaptable le présent procédé.

**Revendications**

1. Procédé intégré de traitement des eaux résiduaires d'ateliers d'anodisation de pièces en aluminium ou en alliage d'aluminium pour laquelle on utilise une solution aqueuse de soude caustique dans le bain de décapage et une solution aqueuse d'acide sulfurique dans le bain d'anodisation, procédé dans lequel le traitement des eaux de rinçage, diluées, s'effectue de manière connue par mélange entre elles et ajustement du pH, indépendamment du traitement des eaux résiduaires concentrées provenant respectivement du décapage et de l'anodisation, caractérisé en ce que le traitement des eaux résiduaires concentrées comprend les ensembles opératoires suivants:

1°) le production de sulfate d'aluminium à l'état d'une solution concentrée ou de cristaux hydratés par traitement d'une partie du débit d'eau résiduaire d'anodisation par évaporation et cristallisation ou au moyen d'une partie de l'hydroxyde d'aluminium formé dans l'ensemble opératoire 2°),

2°) la production d'hydroxyde d'aluminium précipité et d'une solution de sulfate de sodium par traitement de la partie du débit d'eau résiduaire d'anodisation non utilisée dans l'ensemble opératoire 1°) au moyen d'une partie du débit d'eau résiduaire de décapage et

3°) la production d'une solution d'aluminate de sodium par réaction de la partie du débit d'eau résiduaire de décapage non utilisée dans l'ensemble opératoire 2°) avec une partie de l'hydroxyde d'aluminium produit dans l'ensemble opératoire 2°) et élimination d'une quantité d'eau de façon à obtenir finalement l'aluminate de sodium à l'état de solution concentrée, de poudre ou de granules.

2. Procédé suivant la revendication 1 caractérisé en ce qu'on recycle au réacteur utilisé pour la production d'hydroxyde d'aluminium précipité et d'une solution de sulfate de sodium une partie de la solution de sulfate d'aluminium produite dans l'ensemble opératoire 1°), une fois que la production de cette dernière solution a démarré.

3. Procédé suivant l'une des revendications 1 et 2 caractérisé en ce qu'on recycle au réacteur utilisé pour la production d'hydroxyde d'aluminium précipité et d'une solution de sulfate de sodium une partie de la solution d'aluminate de sodium produite dans l'ensemble opératoire 3°), une fois que la production de cette dernière solution a démarré.

4. Procédé suivant l'une des revendications 1 à 3 caractérisé en ce que, dans le cas où le débit d'eau résiduaire d'anodisation est déficitaire, on compense le défaut d'eau résidaire acide dans le deuxième ensemble opératoire par l'addition d'une quantité correspondante d'acide sulfurique.

5. Procédé suivant l'une quelconque des revendications 1, 2, 3 et 4 caractérisé en ce qu'on recycle l'eau mère résiduelle de la cristallisation du sulfate de sodium de l'ensemble opératoire 2°) vers le réacteur de précipitation d'hydroxyde d'aluminium compris dans ce même ensemble.

**Patentansprüche**

1. Integriertes Verfahren für die Behandlung von Abwasser aus Betrieben, die Aluminiumteile oder Teile aus Aluminiumlegierungen anodisieren, wobei eine wässerige Natriumhydroxidlösung in der Ätzlösung und eine wässerige Schwefelsäurelösung in der Anodisationslösung verwendet wird, wobei die Behandlung des verdünnten Spülwassers bekannterweise durch Mischung der beiden Lösungen und durch die pH-Regulierung, unabhängig von der Behandlung des von der Ätzanlage bzw der Anodisation herkommenden konzentrierten Abwassers, erfolgt, dadurch gekennzeichnet, daß die Behandlung des konzentrierten Abwassers die folgenden Verfahrenskomplexe aufweist:

1°) Herstellung von Aluminiumsulfat als konzentrierte Lösung oder als hydrierte Kristalle durch Behandlung eines Teils des Anodisationsabwasserdurchsatzes durch Verdampfen und Kristallisieren oder mit einem Teil des im Verfahrenkomplex 2°) gebildeten Aluminiumhydroxids,

2°) Herstellung von gefälltem Aluminiumhydroxid und einer Natriumsulfatlösung durch Behandlung des Teils des Anodisationsabwasserdurchsatzes, der im Verfahrenskomplex 1°) nicht verbraucht worden ist, mit einem Teil des Ätzabwasserdurchsatzes, und,

3°) Herstellung einer Natriumaluminatlösung durch Umsetzung des Teils des Ätzwasserdurchsatzes, der nicht im Verfahrenkomplex 2°) verbraucht worden ist, mit einem Teil des im Verfahrenkomplex 2°) hergestellten Aluminiumhydroxids und durch Austritt einer Wassermenge, um schließlich das Natriumaluminat als konzentrierte Lösung, als Pulver oder als Granulat zu erhalten.

2. Verfahren nach Anspruch 1, dadurch gekennzeichnet, daß man am Reaktor, der für die Herstellung des gefällten Aluminiumhydroxids und einer Natriumsulfatlösung verwendet wird, einen Teil der im Verfahrenkomplex 1°) hergestellten Aluminiumsulfatlösung zurückführt, sobald die Herstellung dieser Lösung angelaufen ist.

3. Verfahren nach einem der Ansprüche 1 oder 2, dadurch gekennzeichnet, daß man am Reaktor, der für die Herstellung des gefällten Aluminiumhydroxids und einer Natriumsulfatlösung verwendet wird, einen Teil der im Verfahrenkomplex 3°) hergestellten Aluminiumsulfatlösung zurückführt, sobald die Herstellung dieser Lösung angelaufen ist.

4. Verfahren nach einem der Ansprüche 1 bis 3, dadurch gekennzeichnet, daß man, im Falle eines zu niedrigen Anodisationsabwasserdurchsatzes, den Fehlbetrag an saurem Abwasser im zweiten Verfahrenkomplex durch Zusatz einer entsprechenden Menge Schwefelsäure ausgleicht.

5. Verfahren nach einem der Ansprüche 1, 2, 3 oder 4, dadurch gekennzeichnet, daß man die restliche Mutterlauge der Kristallisation des Natriumsulfats aus dem Verfahrenkomplex 2°) dem Reaktor zurückführt, in dem die Fällung des Aluminiumhydroxids erfolgt und der im gleichen Komplex enthalten ist.

**Claims**

1. Integrated process for the treatment of waste water resulting from anodizing plants of objects made of aluminium or an aluminium alloy, wherein an aqueous solution of sodium hydroxide is used for the pickling bath and an aqueous solution of sulfuric acid is used in the anodization bath, process wherein treatment of the diluted rinsing water is effected in a known manner by mixing them together and adjusting the pH value, independently of the treatment of the concentrated waste waters resulting from the pickling and from the anodization respectively characterized by the fact that the treatment of the concentrated waste solutions comprises the following sets of operations:

1°) the production of aluminium sulphate in the form of the concentrated solution or in the form of hydrated crystals, by treatment of a portion of the output of anodization waste water by evaporation and crystallisation or by means of a portion of the aluminium hydroxide formed in set of operation 2°)

2°) the production of precipitated aluminium hydroxide and a solution of sodium sulphate by treatment of that portion of the output of anodization waste water which was not used in set of operation 1°), by means of a portion of the output of the pickling waste water, and

3°) the production of a sodium aluminate solution by reaction of the portion of the output of pickling waste water which was not used in set of operation 2°) with a portion of the aluminium hydroxide produced in set of operation 2°), and elimination of a quantity of water such that the sodium aluminate will finally be obtained in the form of concentrated solution, powder or granulates.

2. Process in accordance with claim 1, characterized by the fact that a portion of the aluminium sulphate solution which is produced in set of operation 1°), is recycled to the reactor employed for the production of precipitated aluminium hydroxide and a sodium sulphate solution, once the production of the sodium sulphate solution has started.

3. Process in accordance with one of claims 1 or 2, characterized by the fact that a portion of the sodium aluminate solution produced in set of operation 3°) is recycled to the reactor employed for the production of precipitated aluminium hydroxide and a sodium sulphate solution, once the production of the sodium sulphate solution has started.

4. Process in accordance with one of the claims 1 to 3, characterized by the fact that if the output of the anodization waste water is insufficient, the deficiency of acidic waste water in the second operation set is compensated by adding a corresponding quantity of sulfuric acid.

5. Process in accordance with anyone of claims 1, 2, 3 and 4, characterized by the fact that the residual motherliquor of the crystallisation of the sodium sulphate for the set of operation 2°) is recycled towards the reactor for the precipitation of aluminium hydroxide included in this same set.

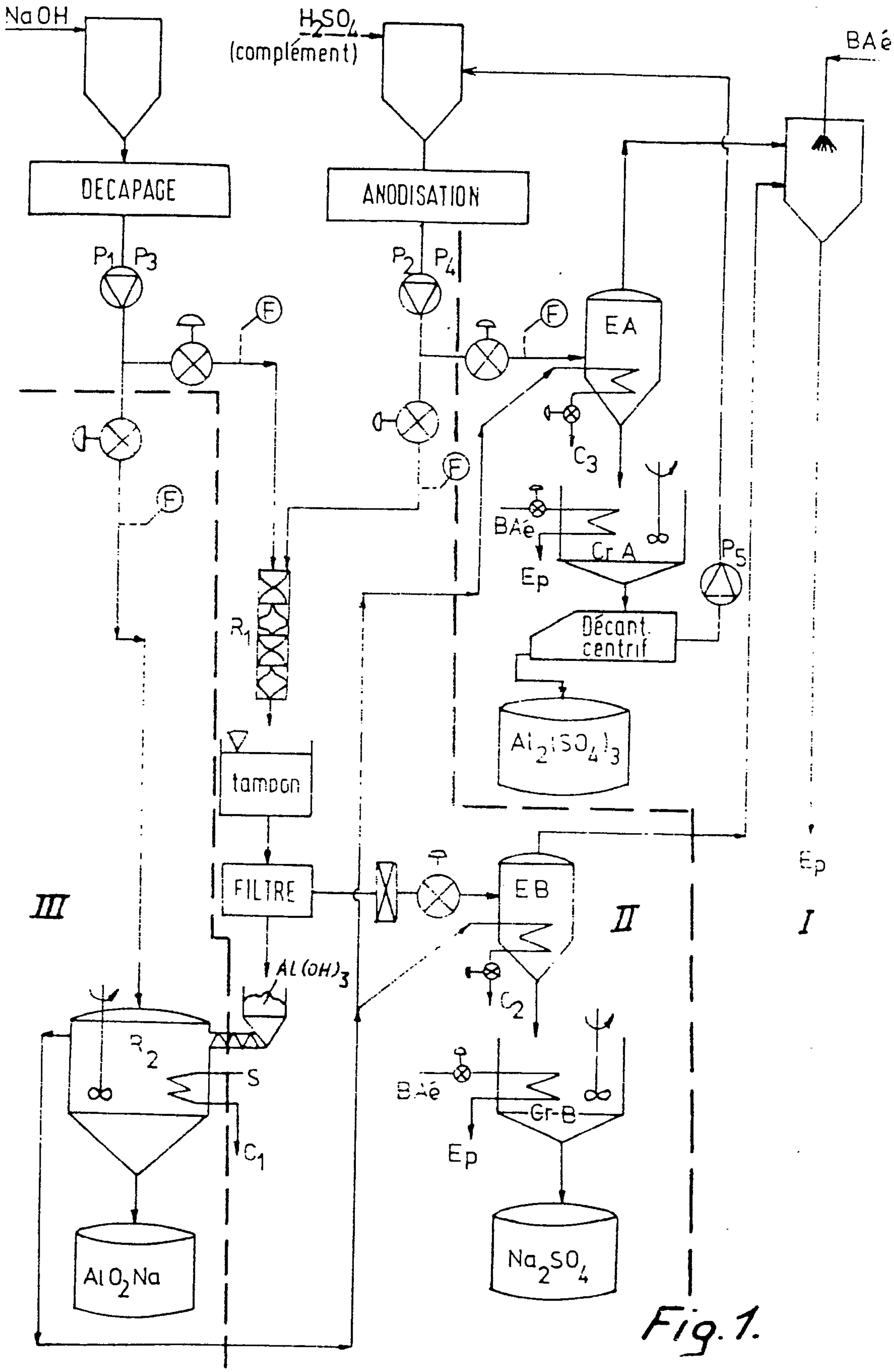
NaOH
$H_2SO_4$
(complément)
BAé
DECAPAGE
ANODISATION
$P_1$ $P_3$
$P_2$ $P_4$
F
EA
$C_3$
BAé
Cr A
Ep
$P_5$
Décant. centrif
$Al_2(SO_4)_3$
$R_1$
tampon
FILTRE
EB
$Al(OH)_3$
III
II
I
$R_2$
S
$C_1$
$C_2$
BAé
Gr-B
Ep
$AlO_2Na$
$Na_2SO_4$
Ep

Fig.1.

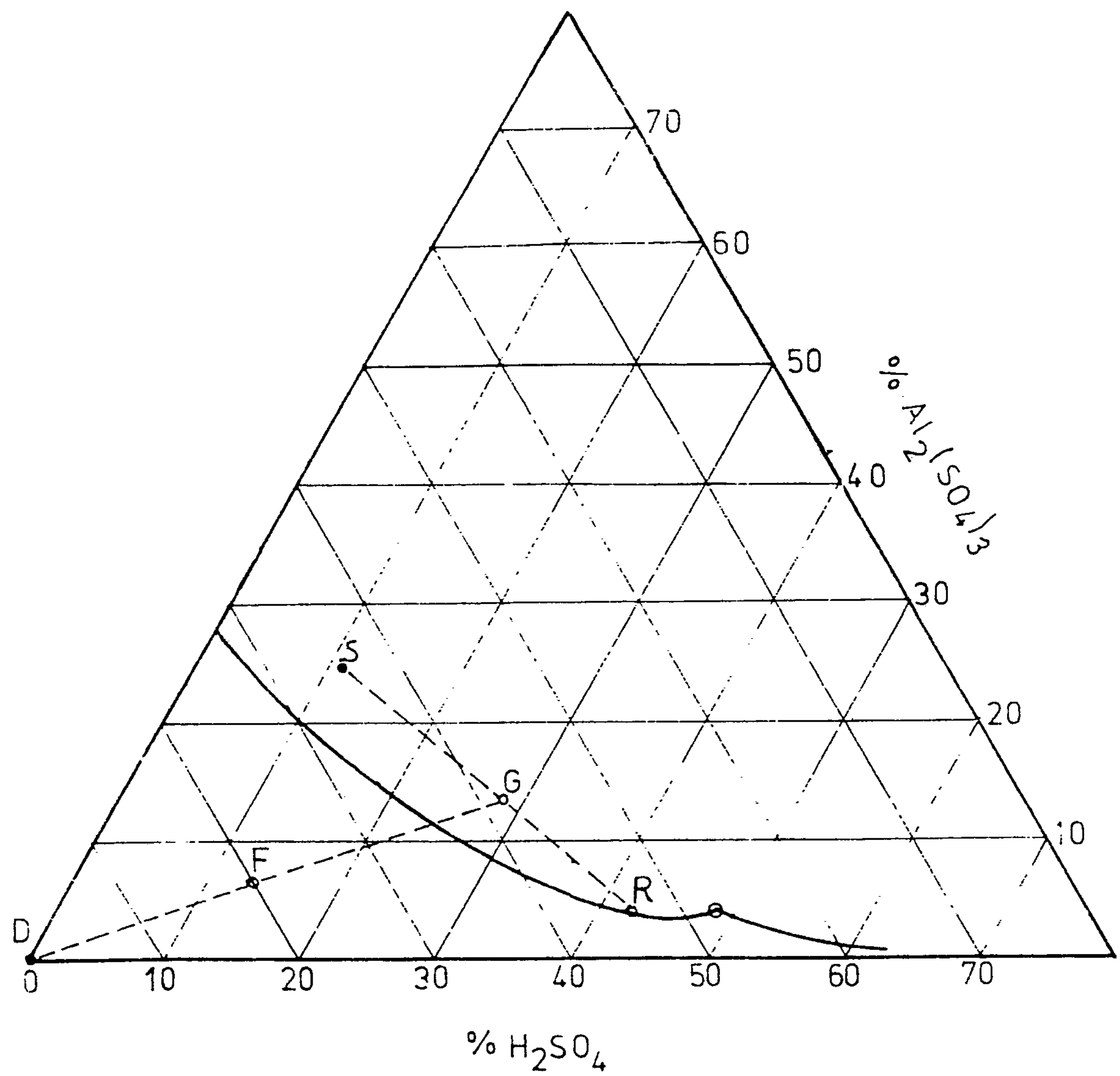


*Fig. 2.*

Fig. 3.

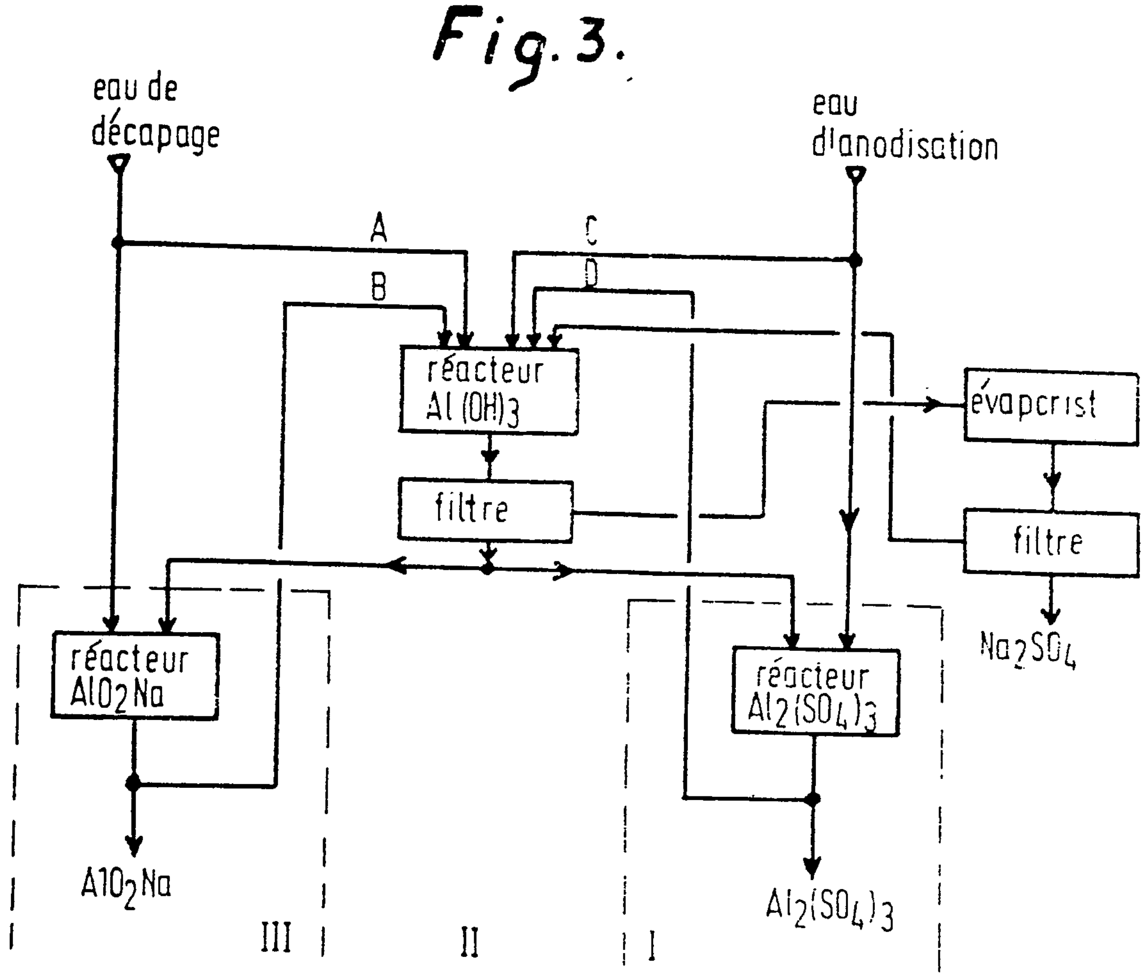

eau de décapage
eau d'anodisation
A
B
C
D
réacteur Al(OH)3
filtre
évapcrist
filtre
Na2SO4
réacteur AlO2Na
AlO2Na
réacteur Al2(SO4)3
Al2(SO4)3
III
II
I